# EUROPEAN PATENT APPLICATION

(11) **EP 1 195 936 A1**
(43) Date of publication of application: **10.04.2002**
(21) Application number: 01932187.6
(22) Date of filing: 22.05.2001
(51) Int. Cl.: H04L 1/00

(54) **WIRELESS COMMUNICATION DEVICE AND WIRELESS COMMUNICATION METHOD**

(30) Priority: 22.05.2000 JP 2000150691
(71) Applicant: MATSUSHITA ELECTRIC INDUSTRIAL CO., LTD., Kadoma-shi, Osaka 571-8501 (JP)
(72) Inventor: AIZAWA, Junichi, Yokohama-shi, Kanagawa 240-0033 (JP); UE, Toyoki, Yokosuka-shi, Kanagawa 238-0022 (JP); UESUGI, Mitsuru, Yokosuka-shi, Kanagawa 238-0048 (JP); AOYAMA, Takahisa, Yokosuka-shi, Kanagawa 239-0841 (JP); HOSHINO, Masayuki, Yokosuka-shi, Kanagawa 239-0841 (JP)
(74) Representative: Grünecker, Kinkeldey, Stockmair & Schwanhäusser Anwaltssozietät
(86) International application number: JP0104260
(87) International publication number: WO0191354

(57) **Abstract**

A separator 109 separates an output signal output from a demodulator 108 into receive data and an OK signal or NG signal, outputs the receive data, and outputs the OK signal or NG signal to a transmission method switching determination section 110. The transmission method switching determination section 110 stores the number of times an OK signal or NG signal is received, determines whether or not the transmission method is to be changed according to the frequency of stored OK signals and NG signals, and based on the result of this determination, outputs to a transmission method switching controller 111 an instruction for carrying out or not carrying out a change of transmission method. If a change of transmission method is necessary according to the instruction from the transmission method switching determination section 110, the transmission method switching controller 111 controls a transmit frame creation section 102, modulator 103, transmit radio section 104, and antenna duplexer 105, and instructs a buffer 101 to output transmit data to be retransmitted.

## Description

### Technical Field

The present invention relates to a radio communication apparatus and radio communication method.

### Background Art

In radio communications, transmitted data may not be received with the correct value due to path effects or the like. In this case, in a system in which the transmitting side transmits data to the receiving side, the receiving side performs error determination for the received data, and if there is an error sends a retransmission request to the transmitting side, and on receiving this retransmission request from the receiving side the transmitting side retransmits data, when the transmitting side receives a retransmission request from the receiving side it transmits data using the same communication method as when it first transmitted data.

Also, after data has been received correctly, when the transmitting side transmits the next data, it also transmits that data using the same communication method as when it first transmitted data.

However, the method used when transmitting data is not necessarily always optimal since channel conditions vary moment by moment, and as the optimum method, including transmission rate, spreading factor, modulation method, and so forth, differs according to the channel conditions, transmission efficiency is poor in radio communications in which transmission is not performed using the optimum method according to the channel conditions.

### Disclosure of Invention

It is an object of the present invention to provide a radio communication apparatus and radio communication method that make it possible to communicate using a communication method that accords with variations in channel conditions.

This object is achieved by estimating channel conditions based on the frequency of successful transmissions and retransmission requests, changing the transmission method to one that allows data to be transmitted more surely if the channel conditions are poor, and changing the transmission method to one that allows data to be transmitted more efficiently when channel conditions have improved, thereby transmitting using the optimum transmission method according to the channel conditions.

### Brief Description of Drawings

FIG.1 is a block diagram showing the configuration of radio communication apparatuses according to Embodiment 1 of the present invention;
FIG.2 is a sequence diagram showing an example of signal exchange between radio communication apparatuses of the above-mentioned embodiment;
FIG.3 is a flowchart showing an example of the operation of a radio communication apparatus 100 of the above-mentioned embodiment;
FIG.4 is a block diagram showing the configuration of radio communication apparatuses according to Embodiment 2 of the present invention;
FIG.5 is a sequence diagram showing an example of signal exchange between radio communication apparatuses of the above-mentioned embodiment;
FIG.6 is a flowchart showing an example of the operation of a radio communication apparatus 250 of the above-mentioned embodiment;
FIG.7 is a block diagram showing the configuration of radio communication apparatuses according to Embodiment 3 of the present invention;
FIG.8 is a block diagram showing the configuration of radio communication apparatuses according to Embodiment 4 of the present invention;
FIG.9 is a block diagram showing the configuration of radio communication apparatuses according to Embodiment 5 of the present invention;
FIG.10 is a block diagram showing the configuration of radio communication apparatuses according to Embodiment 6 of the present invention;
FIG.11 is a block diagram showing the configuration of radio communication apparatuses according to Embodiment 7 of the present invention;
FIG.12 is a block diagram showing the configuration of radio communication apparatuses according to Embodiment 8 of the present invention;
FIG.13 is a block diagram showing the configuration of radio communication apparatuses according to Embodiment 9 of the present invention; and
FIG.14 is a block diagram showing the configuration of radio communication apparatuses according to Embodiment 10 of the present invention.

### Best Mode for Carrying out the Invention

With reference now to the accompanying drawings, embodiments of the present invention will be explained in detail below.

### (Embodiment 1)

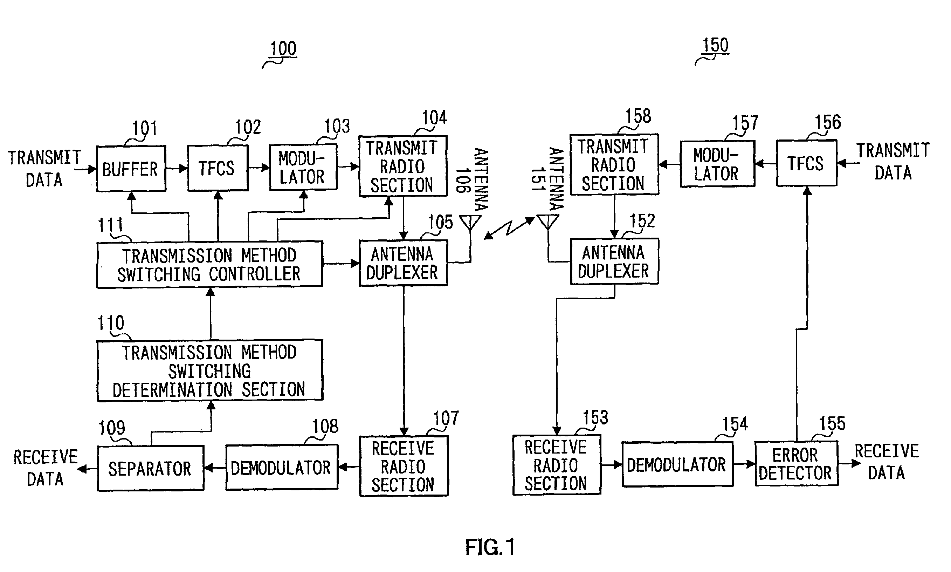

FIG.1 is a block diagram showing the configuration of radio communication apparatuses according to Embodiment 1 of the present invention. In FIG.1, a radio communication apparatus 100 and a radio communication apparatus 150 perform mutual radio communications.

A buffer 101 stores transmit data, and outputs transmit data to a transmit frame creation section 102 in accordance with the instructions of a transmission method switching controller 111. The transmission method switching controller 111 will be described later herein.

The transmit frame creation section 102 composes a transmit frame from transmit data output from the buffer 101 and a transmission method change signal output from the transmission method switching controller 111, and outputs this transmit frame to a modulator 103.

The modulator 103 modulates the transmit frame and outputs an output signal to a transmit radio section 104. The transmit radio section 104 performs radio processing on the output signal output from the modulator 103, and outputs a transmit signal to an antenna duplexer 105.

The antenna duplexer 105 outputs the transmit signal output from the transmit radio section 104 to an antenna 106, and outputs a received signal received by the antenna 106 to a receive radio section 107. The antenna 106 transmits the transmit signal output from the antenna duplexer 105 as a radio signal, and outputs a received signal to the antenna duplexer 105.

The receive radio section 107 performs radio processing on the received signal and outputs the output signal to a demodulator 108. The demodulator 108 demodulates the output signal output from the receive radio section 107, and outputs the output signal to a separator 109.

The separator 109 separates an output signal output from the demodulator 108 into receive data and a transmission request signal (hereinafter referred to as "OK signal") or retransmission request signal (hereinafter referred to as "NG signal"), outputs the receive data, and outputs the OK signal or NG signal to a transmission method switching determination section 110.

The transmission method switching determination section 110 stores the number of times an OK signal and an NG signal are received, and when an OK signal is received, determines whether or not the transmission method is to be changed according to the frequency of stored OK signals and NG signals, and based on the result of this determination, outputs to the transmission method switching controller 111 an instruction for carrying out or not carrying out a change of transmission method.

The transmission method switching determination section 110 also outputs an OK signal or NG signal to the transmission method switching controller 111.

If a change of transmission method is necessary according to the instruction from the transmission method switching determination section 110, the transmission method switching controller 111 creates a transmission method change signal ordering a change of transmission method and outputs this signal to the transmit frame creation section 102, controls the transmit frame creation section 102, modulator 103, transmit radio section 104, and antenna duplexer 105 according to the change of transmission method, and instructs the buffer 101 to output the next transmit data to be transmitted.

If a change of transmission method is not to be carried out, the transmission method switching controller 111 controls the transmit frame creation section 102, modulator 103, transmit radio section 104, and antenna duplexer 105 so that the transmission method is not changed, and instructs the buffer 101 to output the data to be retransmitted.

Antenna 151 receives the radio signal output from antenna 106, and outputs this signal to the antenna duplexer 152 as a received signal. Antenna 151 also outputs a transmit signal received from the antenna duplexer 152 as a radio signal.

The antenna duplexer 152 outputs the received signal output from antenna 151 to the receive radio section 153. The antenna duplexer 152 also outputs a transmit signal output from the transmit frame creation section 158 to antenna 151.

The receive radio section 153 performs radio processing on the received signal output from the antenna duplexer 152, and outputs the resulting signal to the demodulator 154. The demodulator 154 demodulates the received signal output from the receive radio section 153, and outputs the obtained receive frame to an error detector 155.

The error detector 155 determines whether or not there is an error in the receive frame data output from the demodulator 154, and if there is an error in the received data, outputs to the transmit frame creation section 156 a retransmission request signal (NG signal) for retransmission of the data containing an error. If there is no error in the received data, the error detector 155 outputs to the transmit frame creation section 156 a transmission request signal (OK signal) requesting transmission of the next data, and outputs the error-free received data.

The transmit frame creation section 156 creates a transmit frame from the transmit data and OK signal or NG signal, and outputs this transmit frame to a modulator 157. The modulator 157 modulates the transmit frame and outputs the resulting signal to a transmit radio section 158 as a transmit signal. The transmit radio section 158 performs radio processing on the transmit signal output from the modulator 157, and outputs the resulting signal to the antenna duplexer 152.

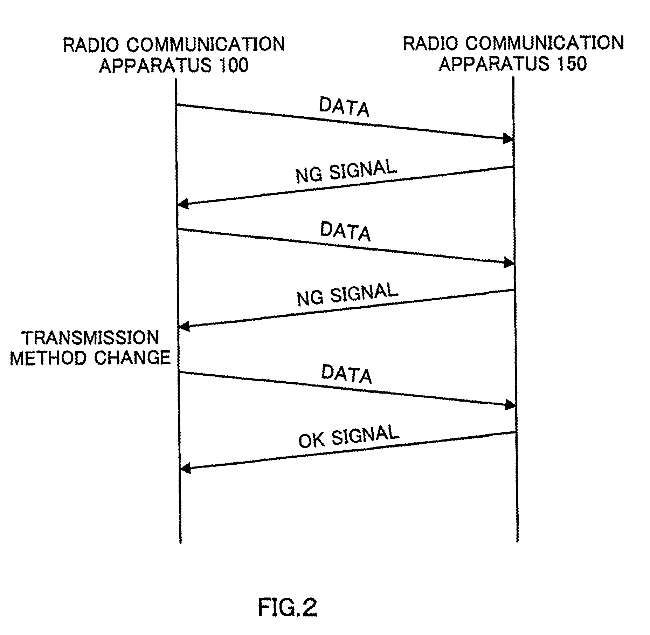

Next, communication between radio communication apparatuses of this embodiment will be described. FIG.2 is a sequence diagram showing an example of signal exchange between radio communication apparatuses of this embodiment. FIG.2 shows an example in which the transmission method is changed when an error occurs twice in data transmission.

In FIG.2, radio communication apparatus 100 transmits data to radio communication apparatus 150. As there is an error in the received data, radio communication apparatus 150 transmits an NG signal requesting data retransmission to radio communication apparatus 100.

Radio communication apparatus 100 receives the NG signal and again transmits data to radio communication apparatus 150. As there is an error in the received data, radio communication apparatus 150 transmits an NG signal requesting data retransmission to radio communication apparatus 100.

As an NG signal has been received twice and the frequency for carrying out a switch of transmission method has been reached, radio communication apparatus 100 changes the transmission method and retransmits the data. As there is no error in the received data, radio communication apparatus 150 transmits an OK signal requesting transmission of the next data to radio communication apparatus 100.

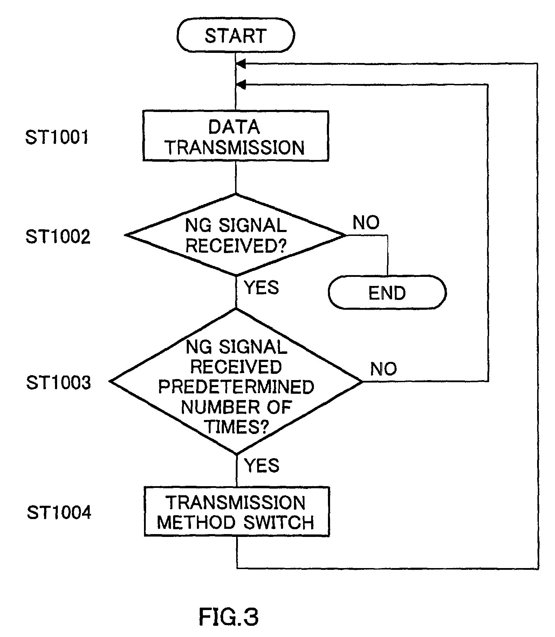

The operation of radio communication apparatus 100 will now be described. FIG.3 is a flowchart showing an example of the operation of radio communication apparatus 100 of this embodiment. FIG.3 illustrates the operation when one item of data is transmitted, and operation continues until the communicating party receives the data correctly.

In Step (hereinafter referred to as "ST") 1001, transmit data is transmitted from the buffer 101 via the transmit frame creation section 102, modulator 103, transmit radio section 104, antenna duplexer 105, and antenna 106.

In ST1002, the transmission method switching determination section 110 determines whether or not an NG signal has been received. If an NG signal has been received, the processing flow proceeds to ST1003. If an NG signal has not been received and an OK signal has been received, processing is terminated.

In ST1003, the transmission method switching determination section 110 determines whether or not the number of times an NG signal has been received is equal to or greater than a predetermined number. If the number of times an NG signal has been received is equal to or greater than the predetermined number, the processing flow proceeds to ST1004. If the number of times an NG signal has been received is less than the predetermined number, the processing flow returns to ST1001.

In ST1004, the transmission method switching determination section 110 gives an instruction for transmission method switching, and the processing flow returns to ST1001.

Next, the signal flow of radio communication apparatuses of this embodiment will be described.

Transmit data is stored in the buffer 101, is output from the buffer 101 to the transmit frame creation section 102 in accordance with an instruction from the transmission method switching controller 111, is configured as a transmit frame by the transmit frame creation section 102, and is output as a transmit frame to the modulator 103.

The transmit frame is modulated by the modulator 103 and output to the transmit radio section 104, undergoes radio processing in the transmit radio section 104,and passes through the antenna duplexer 105 and antenna 106 to be output as a radio signal.

The radio signal is output to the receive radio section 153 through antenna 151 and antenna duplexer 152 as a receive signal.

The received signal undergoes radio processing in the receive radio section 153 and is output to the demodulator 154, is demodulated by the demodulator 154, and is output to the error detector 155.

For a received signal, the error detector 155 determines whether or not there is an error in the received data. If there is an error, an NG signal for data with an error is output to the transmit frame creation section 156. If there is no error, an OK signal for data with no error is output to the transmit frame creation section 156, and the received data is output.

The OK signal or NG signal is configured as a frame together with transmit data by the transmit frame creation section 156.

The transmit frame is modulated by the modulator 157 and output to the transmit radio section 158, undergoes radio processing by the transmit radio section 158, and passes through the antenna duplexer 152 and antenna 151 to be output as a radio signal.

The radio signal is received via antenna 106 and antenna duplexer 105, is output to the receive radio section 107 as a received signal, undergoes radio processing by the receive radio section 107 and is output to the demodulator 108, and is demodulated by the demodulator 108 and output to the separator 109.

The received signal is separated into receive data and an OK signal or NG signal by the separator 109. The receive data is output externally and the OK signal or NG signal is output to the transmission method switching determination section 110.

The transmission method switching determination section 110 stores the number of times an OK signal or NG signal is received.

When an NG signal is input to the transmission method switching determination section 110, the NG signal is output to the transmission method switching controller 111 via the transmission method switching determination section 110, a retransmission request instruction is output to the buffer 101, and a retransmission data is output from the buffer 100 to the transmit frame creation section 102.

The transmit data to be retransmitted is configured as a transmit frame by the transmit frame creation section 102 and output to the modulator 103, is modulated by the modulator 103 and output to the transmit radio section 104, undergoes radio processing by the transmit radio section 104, passes through the antenna duplexer 105 and antenna 106 to be output as a radio signal, and passes through antenna 151 and antenna duplexer 152 to be output as a received signal to the receive radio section 153.

When an OK signal is input to the transmission method switching determination section 110, an instruction as to whether or not the transmission method is to be changed is determined according to the frequency of stored OK signals and NG signals, and this instruction is output to the transmission method switching controller 111. The OK signal is also output to the transmission method switching controller 111.

If a change of transmission method is necessary, a transmission method change instruction is output from the transmission method switching controller 111 to the transmit frame creation section 102, modulator 103, transmit radio section 104, and antenna duplexer 105, an instruction to transmit the next data is output to the buffer 101, and the buffer 101 is cleared of the successfully transmitted data and has the next data to be transmitted input to it.

The next data to be transmitted is configured as a frame together with a transmission method change signal by the transmit frame creation section 102, is modulated by the modulator 103 and output to the transmit radio section 104, undergoes radio processing by the transmit radio section 104, passes through the antenna duplexer 105 and antenna 106 to be output as a radio signal, passes through antenna 151 and antenna duplexer 152 to be output as a received signal to the receive radio section 153, undergoes radio processing by the receive radio section 153,and is demodulated by the demodulator 154 in accordance with the transmission method change signal.

Thus, according to radio communication apparatuses of this embodiment, it is possible to transmit using the optimum transmission method according to channel conditions, and improve transmission efficiency, by changing the transmission method based on successful transmission and retransmission request information.

### (Embodiment 2)

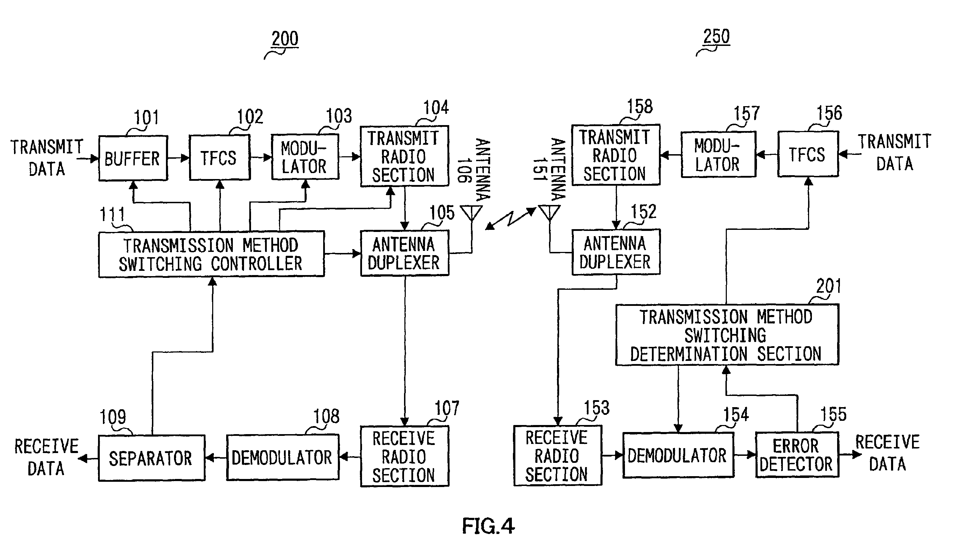

FIG.4 is a block diagram showing the configuration of radio communication apparatuses according to Embodiment 2 of the present invention. Parts in FIG.4 identical to those in FIG.1 are assigned the same reference numbers as in FIG.1 and their detailed explanations are omitted.

Radio communication apparatus 250 shown in FIG.4 differs from radio communication apparatus 150 in FIG.1 in that a transmission method switching determination section 201 is provided, and determination as to whether or not transmission method switching is to be carried out is performed by the radio communication apparatus that receives data.

In FIG.4, a radio communication apparatus 200 and radio communication apparatus 250 perform mutual radio communications.

The demodulator 154 demodulates a received signal output from the receive radio section 153, and outputs the obtained receive frame to the error detector 155.

The error detector 155 determines whether or not there is an error in the receive frame data output from the demodulator 154, and if there is an error in the received data, outputs to the transmission method switching determination section 201 a retransmission request signal (NG signal) for retransmission of the data containing an error. If there is no error in the received data, the error detector 155 outputs to the transmission method switching determination section 201 a transmission request signal (OK signal) requesting transmission of the next data, and outputs the error-free received data.

The transmit frame creation section 156 creates a transmit frame from the transmit data, the OK signal or NG signal output from the transmission method switching determination section 201, and a transmission method change signal, and outputs this transmit frame to the modulator 157. The transmission method change signal will be described later herein.

The transmission method switching determination section 201 stores the number of times an OK signal and an NG signal output from the error detector 155 have been received, and when an OK signal is received, determines whether or not the transmission method is to be changed based on the frequency of stored OK signals and NG signals. when a change of transmission method is necessary, the transmission method switching determination section 201 creates a transmission method change signal ordering a change of transmission method, and outputs this signal to the transmit frame creation section 156. The transmission method switching determination section 201 also outputs the transmission method change signal to the demodulator 154.

In addition, the transmission method switching determination section 201 outputs an OK signal or NG signal to the transmit frame creation section 156.

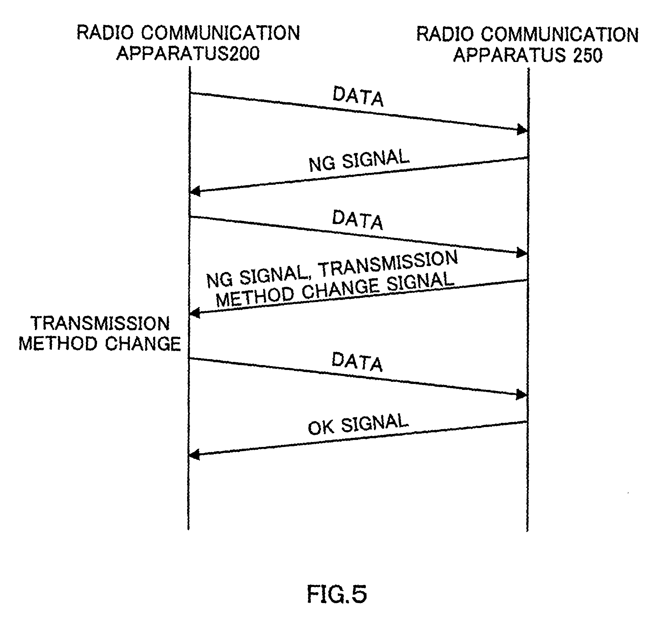

Next, communication between communication terminal apparatuses of this embodiment will be described. FIG.5 is a sequence diagram showing an example of signal exchange between radio communication apparatuses of this embodiment. FIG.5 shows an example in which the transmission method is changed when an error occurs twice in data transmission.

In FIG.5, radio communication apparatus 200 transmits data to radio communication apparatus 250. As there is an error in the received data, radio communication apparatus 250 transmits an NG signal requesting data retransmission to radio communication apparatus 200.

Radio communication apparatus 200 receives the NG signal and again transmits data to radio communication apparatus 250. As there is an error in the received data, the number of error occurrences is two, and the frequency at which transmission method switching is to be performed has been reached, radio communication apparatus 250 transmits a signal ordering a change of transmission method and an NG signal to radio communication apparatus 200.

In accordance with the transmission method change instruction transmitted from radio communication apparatus 250, radio communication apparatus 200 changes the transmission method and retransmits the data. As there is no error in the received data, radio communication apparatus 250 transmits an OK signal requesting transmission of the next data to radio communication apparatus 200.

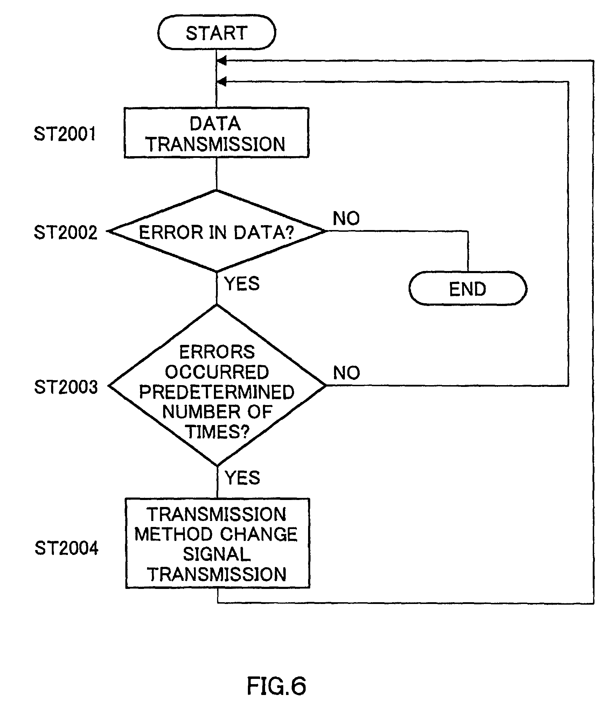

The operation of radio communication apparatus 250 will now be described. FIG.6 is a flowchart showing an example of the operation of radio communication apparatus 250 of this embodiment. FIG.6 illustrates the operation when one item of data is transmitted, and operation continues until the communicating party receives the data correctly.

In Step (hereinafter referred to as "ST" ) 2001, data transmitted from radio communication apparatus 200 is received via antenna 151, antenna duplexer 152, receive radio section 153, and demodulator 154.

In ST2002, the error detector 155 determines whether or not there is an error in the received data. If there is an error in the received data, the processing flow proceeds to ST2003. If there is no error in the received data, processing is terminated.

In ST2003, the transmission method switching determination section 201 determines whether or not the number of times there has been an error in the received data is equal to or greater than a predetermined number. If the number of times there has been an error in the received data is equal to or greater than the predetermined number, the processing flow proceeds to ST2004. If the number of times there has been an error in the received data is less than the predetermined number, the processing flow proceeds to ST2005.

In ST2004, the transmission method switching determination section 201 gives an instruction for transmission method switching, and the processing flow returns to ST2001.

In ST2005, the NG signal is transmitted to the radio communication apparatus 200 via the transmission method switching determination section 201, the transmit frame creation section 156, modulator 157, transmit radio section 158, antenna duplexer 159 and antenna 151.

Next, the signal flow of radio communication apparatuses of this embodiment will be described.

For a received signal, the error detector 155 determines whether or not there is an error in the received data. If there is an error, an NG signal for data with an error is output to the transmission method switching determination section 201. If there is no error, an OK signal for data with no error is output to the transmission method switching determination section 201, and the received data is output.

An NG signal is output to the transmission method switching determination section 201 and the number of times an NG signal has been received is stored in the transmission method switching determination section 201.Further the NG signal is output from the transmission method switching determination section 201 to the transmit frame creation section 156.

An OK signal is output to the transmission method switching determination section 201 and the number of times an OK signal has been received is stored in the transmission method switching determination section 201. When an OK signal is received, the transmission method switching determination section 201 determines whether or not the transmission method is to be changed according to the frequency of NG signals and OK signals, creates a transmission method change signal based on the result of this determination, and outputs this signal to the transmit frame creation section 156. Further,the OK signal is output from the transmission method switching determination section 201 to the transmit frame creation section 156.

The transmission method change signal and NG signal or OK signal are configured as a frame together with transmit data by the transmit frame creation section 156, output to the modulator 157, modulated by the modulator 157 and output to the transmit radio section 158, undergo radio processing by the transmit radio section 158, and pass through antenna 151 and antenna duplexer 152 to be output as a radio signal.

The radio signal is output to the receive radio section 107 through antenna 106 and antenna duplexer 105 as a received signal

If an OK signal is included in the received signal, the received signal undergoes radio processing by the receive radio section 107 and is output to the demodulator 108, is demodulated by the demodulator 108 and output to the separator 109, and in the separator 109 is separated into an OK signal, a transmission method change signal, and receive data. The OK signall and the transmission method change signal are output to the transmission method switching controller 111, and the receive data is output.

If a transmission method change signal is not included in the received signal, the received signal is separated into an OK signal and receive data. The OK signal is output to the transmission method switching controller 111, and the receive data is output.

When an OK signal and a transmission method change signal are output to the transmission method switching controller 111, based on the transmission method change signal a transmission method change instruction signal is output to the transmit frame creation section 102, modulator 103, transmit radio section 104, and antenna duplexer 105.

The instruction signal is output to the transmit frame creation section 102, modulator 103, transmit radio section 104, and antenna duplexer 105, and orders a change of transmission method for the transmit frame creation section 102, modulator 103, transmit radio section 104, and antenna duplexer 105.

Thus, according to radio communication apparatuses of this embodiment, it is possible to improve transmission efficiency by transmitting using the optimum transmission method according to channel conditions by changing the transmission method based on successful transmission and retransmission request information.

### (Embodiment 3)

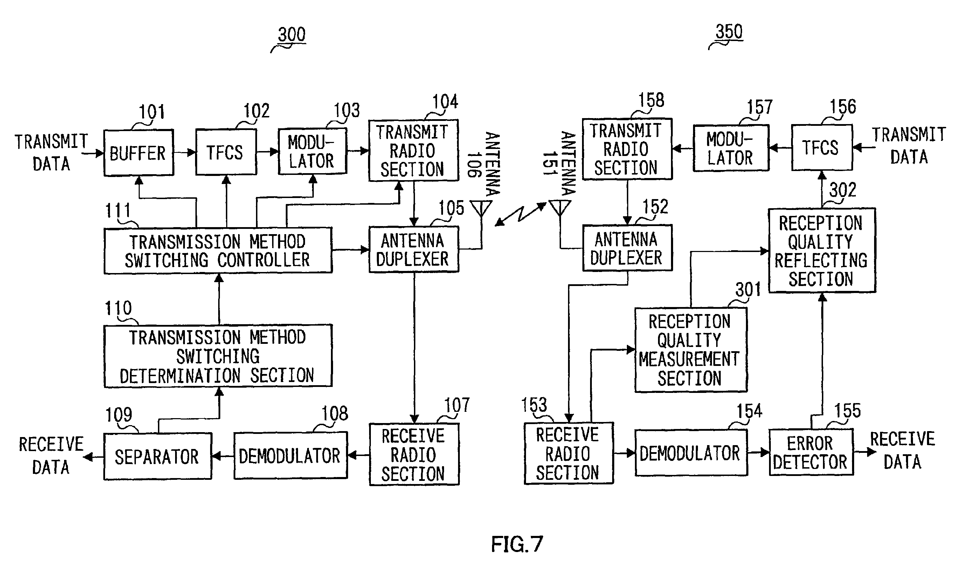

FIG.7 is a block diagram showing the configuration of radio communication apparatuses according to Embodiment 3 of the present invention. Parts in FIG.7 identical to those in FIG.1 are assigned the same reference numbers as in FIG.1 and their detailed explanations are omitted.

Radio communication apparatus 350 shown in FIG.7 differs from radio communication apparatus 150 in FIG.1 in that a reception quality measurement section 301 and reception quality reflecting section 302 are provided, and the transmission method is changed based on information whereby information on successful transmissions and retransmission requests is weighted by received signal quality information.

In FIG.7, a radio communication apparatus 300 and radio communication apparatus 350 perform mutual radio communications.

The receive radio section 153 performs radio processing on a received signal output from the antenna duplexer 152, and outputs the resulting signal to the demodulator 154 and reception quality measurement section 301.

The error detector 155 determines whether or not there is an error in the receive frame data output from the demodulator 154, and if there is an error in the received data, outputs to the reception quality reflecting section 302 an NG signal for retransmission of the data containing an error. The error detector 155 also outputs an OK signal to the reception quality reflecting section 302 and outputs error-free received data.

The transmit frame creation section 156 creates a transmit frame from the transmit data, reception quality information, and OK signal or NG signal, and outputs this transmit frame to the modulator 157.

The reception quality measurement section 301 measures the reception quality of the received signal output from the receive radio section 153, and outputs reception quality information to the reception quality reflecting section 302.

The reception quality reflecting section 302 combines the reception quality information output from the reception quality measurement section 301 with the OK signal or NG signal, and outputs the resulting signal to the transmit frame creation section 156.

The transmission method switching determination section 110 extracts the OK signal or NG signal and reception quality information, which it uses as weight information when calculating the ratio of OK signals to NG signals.

In addition, when an OK signal is received, the transmission method switching determination section 110 calculates the frequency of OK signals and NG signals with a weight added based on the reception quality information, determines whether or not the transmission method is to be changed based on the result of the calculation, and according to the result of this determination, outputs an instruction for carrying out or not carrying out a change of transmission method to the transmission method switching controller 111.

The transmission method switching determination section 110 also outputs an OK signal or NG signal to the transmission method switching controller 111.

Thus, according to radio communication apparatuses of this embodiment, it is possible to improve transmission efficiency by transmitting using the optimum transmission method according to channel conditions by changing the transmission method based on information whereby information on successful transmissions and retransmission requests is weighted by received signal quality information.

### (Embodiment 4)

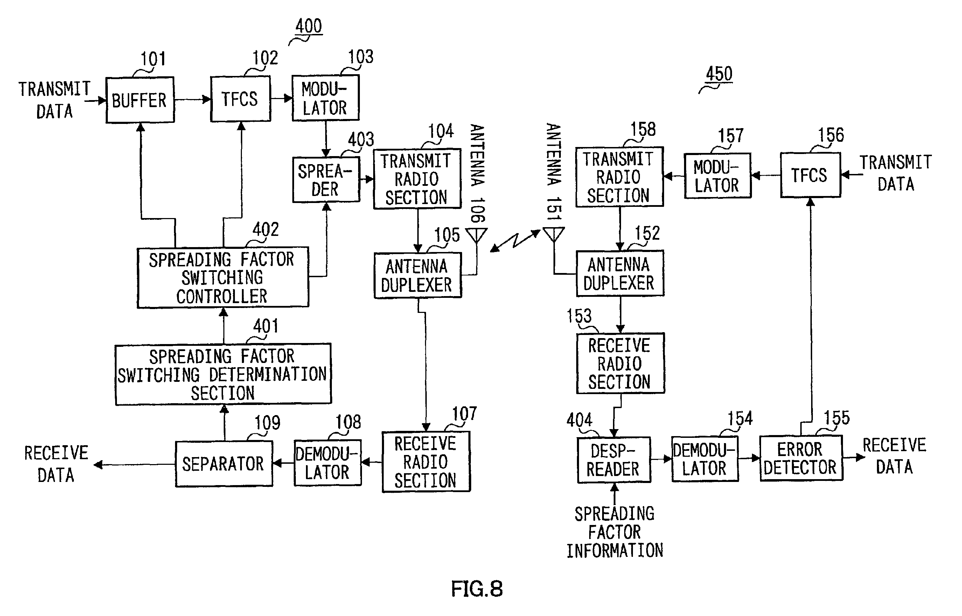

FIG.8 is a block diagram showing the configuration of radio communication apparatuses according to Embodiment 4 of the present invention. Parts in FIG.8 identical to those in FIG.1 are assigned the same reference numbers as in FIG.1 and their detailed explanations are omitted.

Radio communication apparatuses 400 and 450 shown in FIG.4 differ from radio communication apparatuses 100 and 150 in FIG.1 in that radio communication apparatus 400 is provided with a spreading factor switching determination section 401, spreading factor switching controller 402, and spreader 403, radio communication apparatus 450 is provided with a despreader 404, and the spreading factor is changed based on successful transmission and retransmission request information.

In FIG.8, radio communication apparatus 400 and radio communication apparatus 450 perform mutual radio communications.

The buffer 101 stores transmit data, and outputs transmit data to the transmit frame creation section 102 in accordance with the instructions of the spreading factor switching controller 402. The spreading factor switching controller 402 will be described later herein.

The transmit frame creation section 102 composes a transmit frame from spreading factor change information output from the spreading factor switching controller 402 and transmit data output from the buffer 101, and outputs this transmit frame to the modulator 103.

The transmit frame creation section 102 also composes a transmit frame in accordance with an instruction from the spreading factor switching controller 402 in transmit data output from the buffer 101, and outputs this transmit frame to the modulator 103.

The modulator 103 modulates the transmit frame and outputs an output signal to the spreader 403. The spreader 403 will be described later herein.

The transmit radio section 104 performs radio processing on the output signal output from the spreader 403, and outputs a transmit signal to the antenna duplexer 105.

The separator 109 separates an output signal output from the demodulator 108 into receive data and an OK signal or NG signal, outputs the receive data, and outputs the OK signal or NG signal to the spreading factor switching determination section 401.

Receive radio section 153 performs radio processing on the received signal output from the antenna duplexer 152, and outputs the resulting signal to the despreader 404. The despreader 404 will be described later herein.

The demodulator 154 demodulates the received signal output from the despreader 404, and outputs the obtained receive frame to the error detector 155.

The error detector 155 determines whether or not there is an error in the receive frame data output from the demodulator 154, and if there is an error in the received data, outputs to the transmit frame creation section 156 an NG signal for retransmission of the data containing an error. The error detector 155 also outputs an OK signal to the transmit frame creation section 156, and outputs error-free received data.

The spreading factor switching determination section 401 stores the number of times an OK signal output from the separator 109 has been received, and when an OK signal is received, determines whether or not the spreading factor is to be changed based on the frequency of OK signals and NG signals, and according to the result of this determination, outputs an instruction for carrying out or not carrying out a change of spreading factor to the spreading factor switching controller 402.

The spreading factor switching determination section 401 also outputs an OK signal or NG signal to the spreading factor switching controller 402.

The spreading factor switching controller 402 gives a spreading factor instruction to the transmit frame creation section 102 and spreader 403 in accordance with the instruction output from the spreading factor switching determination section 401, outputs spreading factor change information to the transmit frame creation section 102, and outputs an instruction requesting transmission of the next data to the buffer 101.

If a change of spreading factor is not to be carried out, the spreading factor switching controller 402 controls the transmit frame creation section 102 and spreader 403 so that the spreading factor is not changed.

The spreader 403 spreads the output signal output from the modulator 103 using the spreading factor indicated by the spreading factor switching controller 402, and outputs the resulting signal to the transmit radio section 104. If channel conditions are good, spreading is performed with a decreased spreading factor, and if channel conditions are poor, spreading is performed with an increased spreading factor. If channel conditions are extremely poor, spreading is performed with an increased spreading factor, but an upper limit is set for the spreading factor.

The despreader 404 despreads a received signal output from the receive radio section 153 using a spreading factor based on spreading factor change information.

Thus, according to radio communication apparatuses of this embodiment, it is possible to improve transmission efficiency by transmitting using the optimum transmission method according to channel conditions by changing the spreading factor based on successful transmission and retransmission request information.

Also, according to radio communication apparatuses of this embodiment, when channel conditions improve it is possible to improve transmission efficiency by transmitting with the spreading factor decreased based on successful transmission and retransmission request information.

Moreover, according to radio communication apparatuses of this embodiment, when channel conditions degrade it is possible to reduce the number of retransmissions and reduce delays on the receiving side by transmitting with the spreading factor increased so that there are fewer errors based on successful transmission and retransmission request information. Also, successful transmission is possible when channel conditions degrade to an extreme degree.

Furthermore, according to radio communication apparatuses of this embodiment, when channel conditions degrade to an extreme degree, it is possible to prevent degradation of transmission efficiency by transmitting with the spreading factor increased to an unlimited extent based on successful transmission and retransmission request information.

### (Embodiment 5)

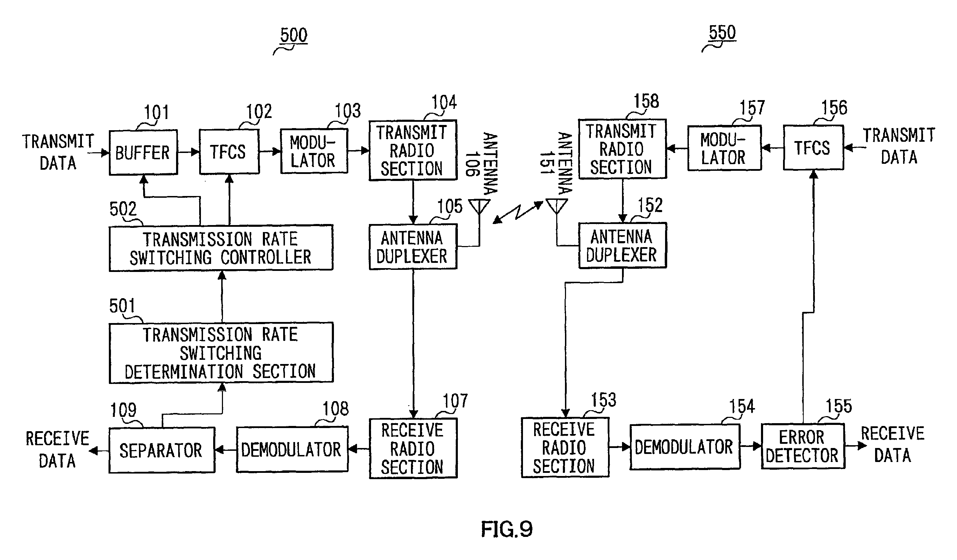

FIG.9 is a block diagram showing the configuration of radio communication apparatuses according to Embodiment 5 of the present invention. Parts in FIG.9 identical to those in FIG.1 are assigned the same reference numbers as in FIG.1 and their detailed explanations are omitted.

In FIG.9, a radio communication apparatus 500 and radio communication apparatus 550 perform mutual radio communications.

Radio communication apparatus 500 shown in FIG.9 differs from radio communication apparatus 100 in FIG.1 in that a transmission rate switching determination section 501 and transmission rate switching controller 502 are provided, and the transmission rate is changed based on successful transmission and retransmission request information.

The buffer 101 stores transmit data, and outputs transmit data to the transmit frame creation section 102 in accordance with the instructions of the transmission rate switching controller 502. The transmission rate switching controller 502 will be described later herein.

The transmit frame creation section 102 composes a transmit frame from transmission rate change information output from the transmission rate switching controller 502 and transmit data output from the buffer 101, and outputs this transmit frame to the modulator 103.

The transmit frame creation section 102 also composes a transmit frame in accordance with an instruction from the transmission rate switching controller 502 in transmit data output from the buffer 101, and outputs this transmit frame to the modulator 103. If channel conditions are good, a transmit frame is composed with an increased transmission rate, and if channel conditions are poor, a transmit frame is composed with a decreased transmission rate. If channel conditions are extremely poor, a transmit frame is composed with a decreased transmission rate, but a lower limit is set for the transmission rate.

The separator 109 separates an output signal output from the demodulator 108 into receive data and an OK signal or NG signal, outputs the receive data, and outputs the OK signal or NG signal to the transmission rate switching determination section 501.

The transmission rate switching determination section 501 stores the number of times an OK signal or NG signal output from the separator 109 has been received, and when an OK signal is received, determines whether or not the transmission rate is to be changed based on the frequency of OK signals and NG signals, and according to the result of this determination, outputs an instruction for carrying out or not carrying out a change of transmission rate to the transmission rate switching controller 502.

The transmission rate switching determination section 501 also outputs an OK signal or NG signal to the transmission rate switching controller 502.

The transmission rate switching controller 502 gives a transmission rate instruction to the transmit frame creation section 102 in accordance with the instruction output from the transmission rate switching determination section 501, outputs transmission rate change information to the transmit frame creation section 102, and outputs an instruction requesting transmission of the next data to the buffer 101.

If a change of transmission rate is not to be carried out, the transmission rate switching controller 502 controls the transmit frame creation section 102 so that the transmission rate is not changed.

Thus, according to radio communication apparatuses of this embodiment, it is possible to improve transmission efficiency by transmitting using the optimum transmission method according to channel conditions by changing the transmission rate based on successful transmission and retransmission request information.

Also, according to radio communication apparatuses of this embodiment, when channel conditions improve it is possible to improve transmission efficiency by transmitting with the transmission rate increased based on successful transmission and retransmission request information.

Moreover, according to radio communication apparatuses of this embodiment, when channel conditions degrade it is possible to reduce the number of retransmissions and reduce delays on the receiving side by transmitting with the transmission rate decreased so that there are fewer errors based on successful transmission and retransmission request information. Also, successful transmission is possible when channel conditions degrade to an extreme degree.

Furthermore, according to radio communication apparatuses of this embodiment, when channel conditions degrade to an extreme degree, it is possible to prevent degradation of transmission efficiency by transmitting with the transmission rate decreased to an unlimited extent based on successful transmission and retransmission request information.

### (Embodiment 6)

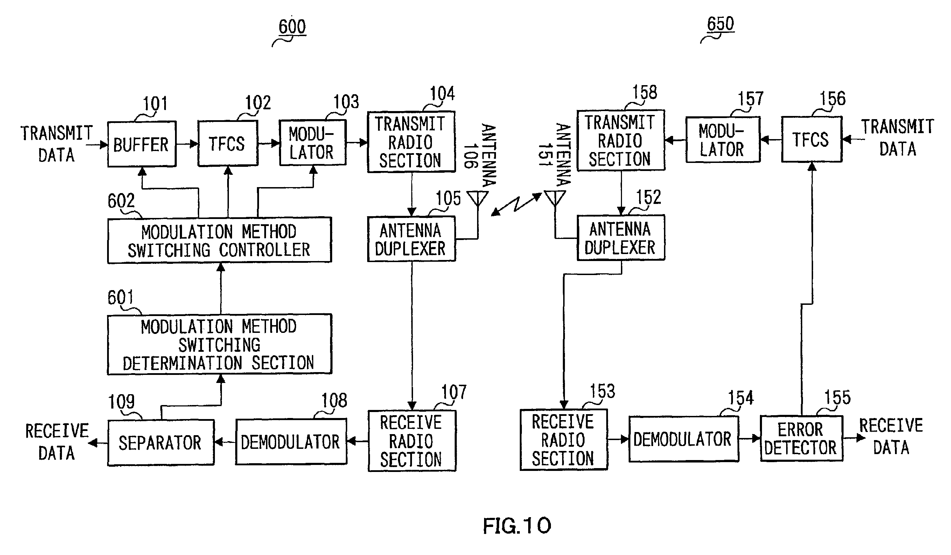

FIG.10 is a block diagram showing the configuration of radio communication apparatuses according to Embodiment 6 of the present invention. Parts in FIG.10 identical to those in FIG.1 are assigned the same reference numbers as in FIG.1 and their detailed explanations are omitted.

Radio communication apparatus 600 shown in FIG.10 differs from radio communication apparatus 100 in FIG.1 in that a modulation method switching determination section 601 and modulation method switching controller 602 are provided, and the modulation method is changed based on successful transmission and retransmission request information.

In FIG.10, radio communication apparatus 600 and radio communication apparatus 650 perform mutual radio communications.

The buffer 101 stores transmit data, and outputs transmit data to the transmit frame creation section 102 in accordance with the instructions of the modulation method switching controller 602. The modulation method switching controller 602 will be described later herein.

The transmit frame creation section 102 composes a transmit frame from modulation method change information output from the modulation method switching controller 602 and transmit data output from the buffer 101, and outputs this transmit frame to the modulator 103.

Further, the transmit frame creation section 102 composes a transmit frame from transmit data output from the buffer 101 according to the instruction from the modulation method switching controller 602, and outputs this transmit frame to the modulator 103.

The modulator 103 modulates the transmit frame using the modulation method indicated by the modulation method switching controller 602, and outputs the output signal to the transmit radio section 104. For example, modulation may be performed using the 8PSK modulation method if channel conditions are good, and using the QPSK modulation method or BPSK modulation method if channel conditions are poor. That is to say, modulation is performed with a large modulation M-ary number when channel conditions are good, and modulation is performed with a smaller modulation M-ary number when channel conditions are poor.

The separator 109 separates an output signal output from the demodulator 108 into receive data and an OK signal or NG signal, outputs the receive data, and outputs the OK signal or NG signal to the modulation method switching determination section 601.

The modulation method switching determination section 601 stores the number of times an OK signal or NG signal output from the separator 109 has been received, and when an OK signal is received, determines whether or not the modulation method is to be changed based on the frequency of OK signals and NG signals, and according to the result of this determination, outputs an instruction for carrying out or not carrying out a change of modulation method to the modulation method switching controller 602.

The modulation method switching determination section 601 also outputs an OK signal or NG signal to the modulation method switching controller 602.

The modulation method switching controller 602 gives a modulation method instruction to the transmit frame creation section 102 and modulator 103 in accordance with the instruction output from the modulation method switching determination section 601, outputs modulation method change information to the transmit frame creation section 102, and outputs an instruction requesting transmission of the next data to the buffer 101.

If a change of modulation method is not to be carried out, the modulation method switching controller 602 controls the transmit frame creation section 102 and modulator 103 so that the modulationmethod is not changed.

Thus, according to radio communication apparatuses of this embodiment, it is possible to improve transmission efficiency by transmitting using the optimum modulation method according to channel conditions by changing the modulation method based on successful transmission and retransmission request information.

Also, according to radio communication apparatuses of this embodiment, when channel conditions improve it is possible to improve transmission efficiency by transmitting with the modulation M-ary number increased based on successful transmission and retransmission request information.

Moreover, according to radio communication apparatuses of this embodiment, when channel conditions degrade it is possible to reduce the number of retransmissions and reduce delays on the receiving side by transmitting with the modulation M-ary number decreased so that there are fewer errors based on successful transmission and retransmission request information. Also, successful transmission is possible when channel conditions degrade to an extreme degree.

### (Embodiment 7)

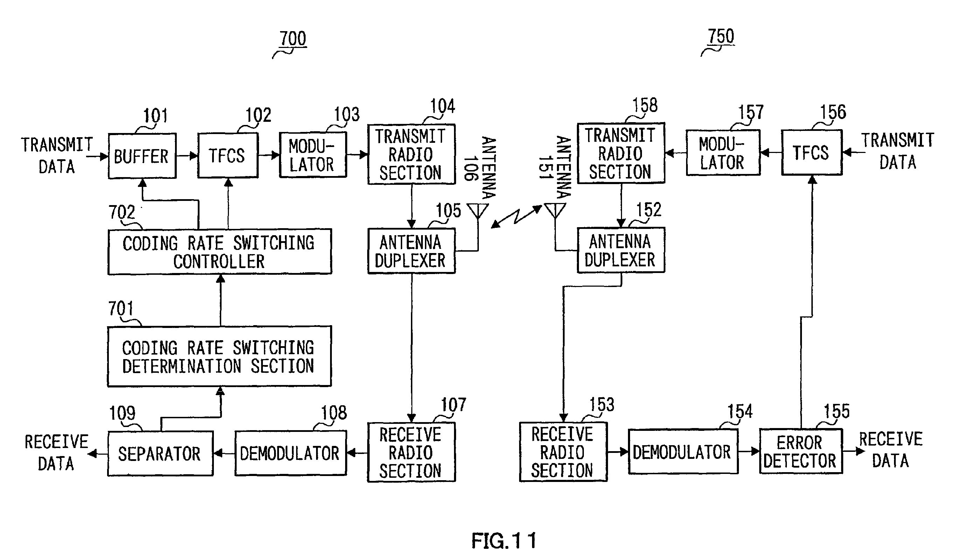

FIG.11 is a block diagram showing the configuration of radio communication apparatuses according to Embodiment 7 of the present invention. Parts in FIG.11 identical to those in FIG.1 are assigned the same reference numbers as in FIG.1 and their detailed explanations are omitted.

Radio communication apparatus 700 shown in FIG.11 differs from radio communication apparatus 100 in FIG.1 in that a coding rate switching determination section 701 and coding rate switching controller 702 are provided, and the coding rate is changed based on successful transmission and retransmission request information.

In FIG.11, radio communication apparatus 700 and radio communication apparatus 750 perform mutual radio communications.

The buffer 101 stores transmit data, and outputs transmit data to the transmit frame creation section 102 in accordance with the instructions of the coding rate switching controller 702. The coding rate switching controller 702 will be described later herein.

The transmit frame creation section 102 composes a transmit frame from coding rate change information output from the coding rate switching controller 702 and transmit data output from the buffer 101, and outputs this transmit frame to the modulator 103.

Further, the transmit frame creation section 102 composes a transmit frame from transmit data output from the buffer 101 using a coding rate indicated by the coding rate switching controller 702, and outputs this transmit frame to the modulator 103.

If channel conditions are good, a transmit frame is composed with an increased coding rate, and if channel conditions are poor, a transmit frame is composed with a decreased coding rate.

The separator 109 separates an output signal output from the demodulator 108 into receive data and an OK signal or NG signal, outputs the receive data, and outputs the OK signal or NG signal to the coding rate switching determination section 701.

The coding rate switching determination section 701 stores the number of times an OK signal or NG signal output from the separator 109 has been received, and when an OK signal is received, determines whether or not the coding rate is to be changed based on the frequency of OK signals and NG signals, and according to the result of this determination, outputs an instruction for carrying out or not carrying out a change of coding rate to the coding rate switching controller 702.

The coding rate switching determination section 701 also outputs an OK signal or NG signal to the coding rate switching controller 702.

The coding rate switching controller 702 gives a coding rate instruction to the transmit frame creation section 102 in accordance with the instruction output from the coding rate switching determination section 701, outputs coding rate change information to the transmit frame creation section 102, and outputs an instruction requesting transmission of the next data to the buffer 101.

If a change of coding rate is not to be carried out, the coding rate switching controller 702 controls the transmit frame creation section 102 so that the coding rate is not changed.

Thus, according to radio communication apparatuses of this embodiment, it is possible to improve transmission efficiency by transmitting using the optimum coding rate according to channel conditions by changing the coding rate based on successful transmission and retransmission request information.

Also, according to radio communication apparatuses of this embodiment, when channel conditions improve it is possible to improve transmission efficiency by transmitting with the coding rate increased based on successful transmission and retransmission request information.

Moreover, according to radio communication apparatuses of this embodiment, when channel conditions degrade it is possible to reduce the number of retransmissions and reduce delays on the receiving side by transmitting with the coding rate decreased so that there are fewer errors based on successful transmission and retransmission request information. Also, successful transmission is possible when channel conditions degrade to an extreme degree.

### (Embodiment 8)

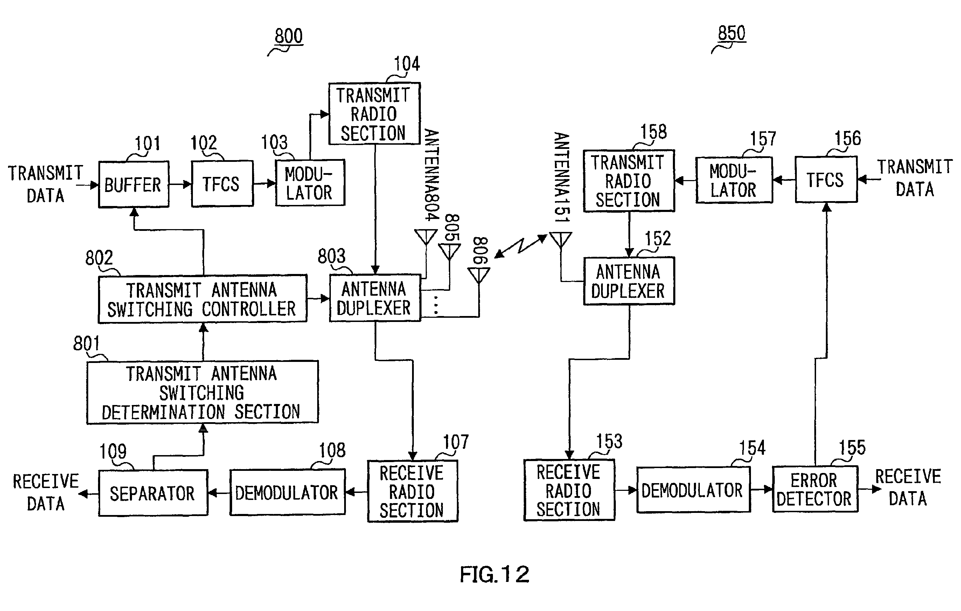

FIG.12 is a block diagram showing the configuration of radio communication apparatuses according to Embodiment 8 of the present invention. Parts in FIG.12 identical to those in FIG.1 are assigned the same reference numbers as in FIG.1 and their detailed explanations are omitted.

Radio communication apparatus 800 shown in FIG.12 differs from radio communication apparatus 100 in FIG.1 in that a transmit antenna switching determination section 801, transmit antenna switching controller 802, antenna duplexer 803, antenna 804, antenna 805, and antenna 806 are provided, and the transmit antenna used is changed based on successful transmission and retransmission request information.

In FIG.12, radio communication apparatus 800 and radio communication apparatus 850 perform mutual radio communications.

The buffer 101 stores transmit data, and outputs transmit data to the transmit frame creation section 102 in accordance with the instructions of the transmit antenna switching controller 802. The transmit antenna switching controller 802 will be described later herein.

The transmit radio section 104 performs radio processing on an output signal output from the modulator 103, and outputs a transmit signal to the antenna duplexer 803.

The separator 109 separates an output signal output from the demodulator 108 into receive data and an OK signal or NG signal, outputs the receive data, and outputs the OK signal or NG signal to the transmit antenna switching determination section 801.

The transmit antenna switching determination section 801 stores the number of times an OK signal or NG signal output from the separator 109 has been received, and when an OK signal is received, determines whether or not the transmit antenna used is to be changed based on the frequency of OK signals and NG signals, and according to the result of this determination, outputs an instruction for carrying out or not carrying out a change of transmit antenna used to the transmit antenna switching controller 802.

The transmit antenna switching determination section 801 also outputs an OK signal or NG signal to the transmit antenna switching controller 802.

The transmit antenna switching controller 802 gives an instruction as to the transmit antenna to be used to the antenna duplexer 803 in accordance with the instruction output from the transmit antenna switching determination section 801, and outputs an instruction requesting transmission of the next data to the buffer 101.

If a change of transmit antenna used is not to be carried out, the transmit antenna switching controller 802 controls the antenna duplexer 803 so that the transmit antenna is not changed.

The antenna duplexer 803 transmits the transmit signal output from the transmit radio section 104 as a radio signal from the antenna from among antenna 804, antenna 805, and antenna 806 indicated by the transmit antenna switching controller 802. Also, a radio signal received by antenna 804, antenna 805, or antenna 806 is output as a received signal to the receive radio section 107.

Antenna 804, antenna 805, and antenna 806 each output a transmit signal output from the antenna duplexer 803 as a radio signal, and output a received radio signal to the antenna duplexer 803.

Thus, according to radio communication apparatuses of this embodiment, it is possible to improve transmission efficiency by transmitting using the optimum transmit antenna according to channel conditions by changing the transmit antenna used based on successful transmission and retransmission request information.

### (Embodiment 9)

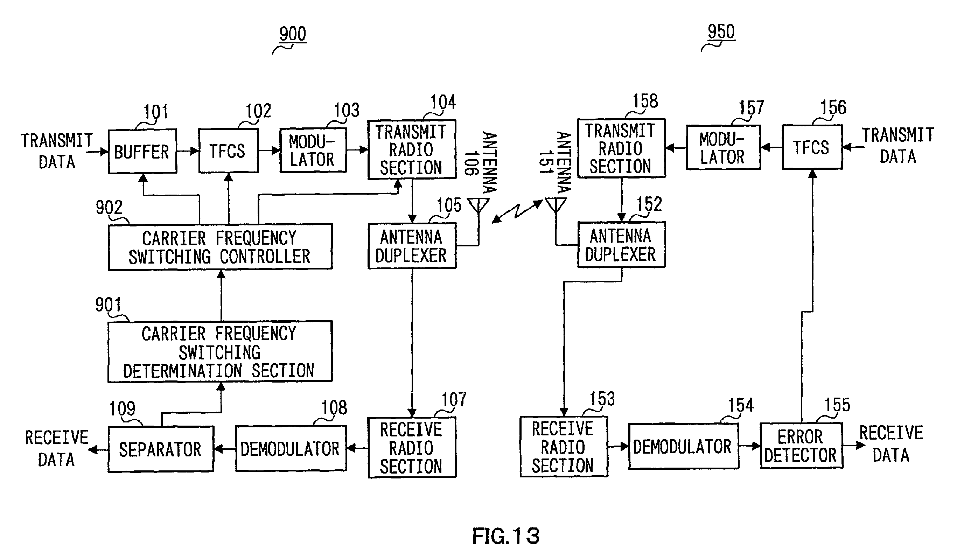

FIG.13 is a block diagram showing the configuration of radio communication apparatuses according to Embodiment 9 of the present invention. Parts in FIG.13 identical to those in FIG.1 are assigned the same reference numbers as in FIG.1 and their detailed explanations are omitted.

Radio communication apparatus 900 shown in FIG.13 differs from radio communication apparatus 100 in FIG.1 in that a carrier frequency switching determination section 901 and carrier frequency switching controller 902 are provided, and the carrier frequency is changed based on successful transmission and retransmission request information.

In FIG.13, radio communication apparatus 900 and radio communication apparatus 950 perform mutual radio communications.

The buffer 101 stores transmit data, and outputs transmit data to the transmit frame creation section 102 in accordance with the instructions of the carrier frequency switching controller 902. The carrier frequency switching controller 902 will be described later herein.

The transmit frame creation section 102 composes a transmit frame from carrier frequency change information output from the carrier frequency switching controller 902 and transmit data output from the buffer 101, and outputs this transmit frame to the modulator 103.

The transmit radio section 104 performs radio processing using the carrier frequency indicated by the carrier frequency switching controller 902, and outputs the resulting signal to the antenna duplexer 105.

The separator 109 separates an output signal output from the demodulator 108 into receive data and an OK signal or NG signal, outputs the receive data, and outputs the OK signal or NG signal to the carrier frequency switching determination section 901.

The carrier frequency switching determination section 901 stores the number of times an OK signal or NG signal output from the separator 109 has been received, and when an OK signal is received, determines whether or not the carrier frequency is to be changed based on the frequency of OK signals and NG signals, and according to the result of this determination, outputs an instruction for carrying out or not carrying out a change of carrier frequency to the carrier frequency switching controller 902.

The carrier frequency switching determination section 901 also outputs an OK signal or NG signal to the carrier frequency switching controller 902.

The carrier frequency switching controller 902 gives a carrier frequency instruction to the transmit radio section 104 in accordance with the instruction output from the carrier frequency switching determination section 901, outputs carrier frequency change information to the transmit frame creation section 102, and outputs an instruction requesting transmission of the next data to the buffer 101.

If a change of carrier frequency is not to be carried out, the carrier frequency switching controller 902 controls the transmit radio section 104 so that the carrier frequency is not changed.

Thus, according to radio communication apparatuses of this embodiment, it is possible to improve transmission efficiency by transmitting using the optimum carrier frequency according to channel conditions by changing the carrier frequency based on successful transmission and retransmission request information.

### (Embodiment 10)

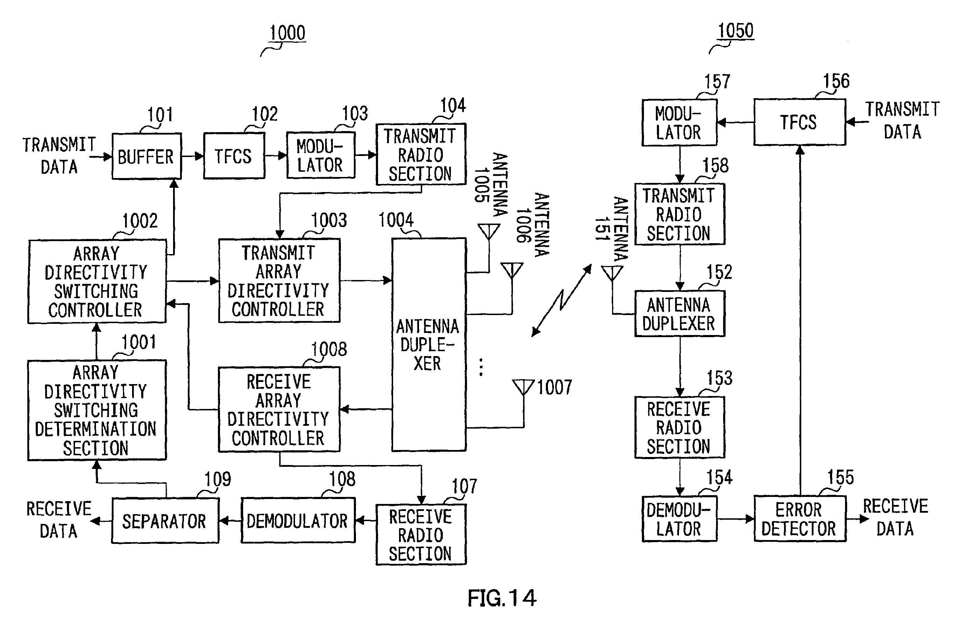

FIG.14 is a block diagram showing the configuration of radio communication apparatuses according to Embodiment 10 of the present invention. Parts in FIG.14 identical to those in FIG.1 are assigned the same reference numbers as in FIG.1 and their detailed explanations are omitted.

Radio communication apparatus 1000 shown in FIG.14 differs from radio communication apparatus 100 in FIG.1 in that an array directivity switching determination section 1001, array directivity switching controller 1002, transmit array directivity controller 1003, antenna duplexer 1004, antenna 1005, antenna 1006, antenna 1007,and receive array directivity controller 1008 are provided, and the transmit antenna array directivity is changed based on successful transmission and retransmission request information.

In FIG.14, radio communication apparatus 1000 and radio communication apparatus 1050 perform mutual radio communications.

The separator 109 separates an output signal output from the demodulator 108 into receive data and an OK signal or NG signal, outputs the receive data, and outputs the OK signal or NG signal to the array directivity switching determination section 1001.

The array directivity switching determination section 1001 stores the number of times an OK signal or NG signal output from the separator 109 has been received, and when an OK signal is received, determines whether or not the transmit antenna array directivity is to be changed based on the frequency of OK signals and NG signals, and according to the result of this determination, outputs an instruction for carrying out or not carrying out a change of transmit antenna array directivity to the array directivity switching controller 1002. For example, if the NG signal frequency is high based on the frequency of stored OK signals and NG signals, the array directivity switching determination section 1001 will give an instruction for a change so that directivity is directed not only to the array directivity path (principal wave) but also to other paths (other than the principal wave).

The array directivity switching determination section 1001 also outputs an OK signal or NG signal to the array directivity switching controller 1002.

The array directivity switching controller 1002 gives a transmit antenna array directivity instruction to the transmit array directivity controller 1003 based on direction of arrival information output from the receive array directivity controller 1008 in accordance with the instruction output from array directivity switching determination section 1001, and also outputs an instruction requesting transmission of the next data to the buffer 101.

If a change of antenna directivity is not to be carried out, the array directivity switching controller 1002 controls the transmit array directivity controller 1003 so that the transmit antenna array directivity is not changed.

The transmit array directivity controller 1003 controls antenna 1005, antenna 1006, and antenna 1007 via the antenna duplexer 1004 in accordance with an instruction from the array directivity switching controller 1002 for a transmit signal output from the transmit radio section 104.

If a change of antenna directivity is not to be carried out, the transmit array directivity controller 1003 controls the antenna duplexer 1004 so that the antenna directivity is not changed.

The antenna duplexer 1004 transmits a transmit signal output from the transmit array directivity controller 1003 as radio signals from antenna 1005, antenna 1006, and antenna 1007. Also, a radio signal received by antenna 1005, antenna 1006, or antenna 1007 is output as a received signal to the receive array directivity controller 1008.

Antenna 1005, antenna 1006, and antenna 1007 each output a transmit signal output from the antenna duplexer 1004 as a radio signal, and output a received radio signal to the antenna duplexer 1004.

The receive array directivity controller 1008 outputs a received signal output from the antenna duplexer 1004 to the receive radio section 107, estimates the direction of arrival of the receive wave based on this received signal, and outputs this as direction of arrival information to the array directivity switching controller 1002.

Thus, according to radio communication apparatuses of this embodiment, it is possible to improve transmission efficiency by transmitting using the optimum array directivity according to channel conditions by changing the transmit antenna array directivity based on successful transmission and retransmission request information.

Also, a radio communication apparatus of this embodiment can communicate using a communication method that accords with variations in channel conditions by controlling antenna beam width.

In this case, when channel conditions improve, interference with other users can be prevented by transmitting with a narrowed transmit antenna directivity beam width based on successful transmission and retransmission request information.

Moreover, in this case, when channel conditions degrade it is possible to reduce the number of retransmissions and reduce delays on the receiving side by transmitting with the transmit antenna directivity beam width increased so that there are fewer errors based on successful transmission and retransmission request information. Also, successful transmission is possible when channel conditions degrade to an extreme degree.

Furthermore, a limit may be set for the widening of an antenna beam width. When channel conditions degrade to an extreme degree, interference with other users can be prevented by transmitting with the transmit antenna directivity beam width increased to an unlimited extent based on successful transmission and retransmission request information.

As a method of determining a change of transmission method, a radio communication apparatus of the present invention can calculate the ratio of a predetermined number of NG signals and OK signals, and make a change if a predetermined threshold value is exceeded.

Also, as a method of determining a change of transmission method, a radio communication apparatus of the present invention can, after once receiving an OK signal, make a determination based on the number of NG signals before the next OK signal is received.

Moreover, as regards transmission method selection, changes are possible one step at a time at a predetermined level each time a change is made.

Furthermore, as regards transmission method selection, it is possible to store values or methods to be changed to in a table, and at the time of a change, reference the table and select the value or method to be changed to.

Also, in the case of information that a determination result has degraded, a radio communication apparatus of the present invention can halt transmission for a fixed time.

In this case, the radio communication apparatus can prevent degradation of transmission efficiency by performing transmission forcibly when channel conditions are poor.

Moreover, with a radio communication apparatus of the present invention, a change of transmission method is not limited to times when an OK signal is received, but may also be carried out when an NG signal is received.

Furthermore, with a radio communication apparatus of the present invention, a combination of the above-described embodiments may also be applied.

As is clear from the above descriptions, according to the present invention it is possible to communicate using a communication method that accords with variations in channel conditions.

This application is based on Japanese Patent Application No. 2000-150691 filed on May 22, 2000, entire content of which is expressly incorporated by reference herein.

## Claims

1. A radio communication apparatus comprising:
storing means for storing a first signal indicating that an error has been detected and a second signal indicating that reception has been performed correctly;
determining means for determining whether a variation in channel conditions is an improvement or a degradation based on said first signal and said second signal; and
controlling means for controlling a communication method according to a determination result of this determining means.

2. The radio communication apparatus according to claim 1, further comprising transmitting means for transmitting said determination result to another radio communication apparatus.

3. The radio communication apparatus according to claim 1, further comprising evaluating means for evaluating received signal quality and outputting quality information to said storing means; wherein:
said storing means stores a first signal and second signal weighted based on said quality information; and
said determining means determines a change of communication method based on said first signal and second signal weighted based on said quality information.

4. The radio communication apparatus according to claim 1, wherein:
said storing means, when the sum of the stored number of said first signals and number of said second signals reaches a predetermined value, reports the received number of said first signals and number of said second signals to said determining means; and
said determining means calculates a retransmission ratio whereby the number of said first signals is divided by the number of said second signals, and if said retransmission ratio is less than a predetermined value, determines that channel conditions have improved, and if said retransmission ratio is equal to or greater than said predetermined value, determines that channel conditions have degraded.

5. The radio communication apparatus according to claim 1, wherein:
said storing means reports to said determining means the number of said first signals received between the most recent said second signal received and a previously received said second signal; and
said determining means, when said number of said first signals reported by said storing means is less than a predetermined value, determines that channel conditions have improved, and if equal to or greater than said predetermined value, determines that channel conditions have degraded.

6. The radio communication apparatus according to claim 1, wherein said determining means, when a said first signal is received, conveys a determination result to said controlling means.

7. The radio communication apparatus according to claim 1, wherein said determining means, when a said second signal is received, conveys a determination result to said controlling means.

8. A radio communication apparatus comprising controlling means for controlling a communication method according to a determination result transmitted from the radio communication apparatus according to claim 2.

9. The radio communication apparatus according to claim 1, wherein said controlling means, in the case of information that a determination result has degraded, halts transmission for a fixed time.

10. The radio communication apparatus according to claim 1, wherein said controlling means changes a spreading factor according to a determination.

11. The radio communication apparatus according to claim 10, wherein said controlling means, in the case of information that a determination result has improved, decreases the spreading factor.

12. The radio communication apparatus according to claim 10, wherein said controlling means, in the case of information that a determination result has degraded, increases the spreading factor.

13. The radio communication apparatus according to claim 10, wherein said controlling means sets an upper limit for a change of spreading factor.

14. The radio communication apparatus according to claim 1, wherein said controlling means changes a transmission rate according to a determination.

15. The radio communication apparatus according to claim 14, wherein said controlling means, in the case of information that a determination result has improved, increases the transmission rate.

16. The radio communication apparatus according to claim 14, wherein said controlling means, in the case of information that a determination result has degraded, decreases the transmission rate.

17. The radio communication apparatus according to claim 14, wherein said controlling means sets a lower limit for a change of transmission rate.

18. The radio communication apparatus according to claim 1, wherein said controlling means changes a modulation method according to a determination.

19. The radio communication apparatus according to claim 18, wherein said controlling means, in the case of information that a determination result has improved, increases the modulation M-ary number.

20. The radio communication apparatus according to claim 18, wherein said controlling means, in the case of information that a determination result has degraded, decreases the modulation M-ary number.

21. The radio communication apparatus according to claim 1, wherein said controlling means changes a coding rate according to a determination.

22. The radio communication apparatus according to claim 21, wherein said controlling means, in the case of information that a determination result has improved, increases the coding rate.

23. The radio communication apparatus according to claim 21, wherein said controlling means, in the case of information that a determination result has degraded, decreases the coding rate.

24. The radio communication apparatus according to claim 1, wherein said controlling means changes a carrier frequency according to a determination.

25. The radio communication apparatus according to claim 1, wherein said controlling means changes a transmit antenna according to a determination.

26. The radio communication apparatus according to claim 1, wherein said controlling means changes transmit antenna array directivity according to a determination.

27. The radio communication apparatus according to claim 1, wherein said controlling means changes a transmit antenna directivity beam width according to a determination.

28. The radio communication apparatus according to claim 27, wherein said controlling means, in the case of information that a determination result has improved, narrows the transmit antenna directivity beam width.

29. The radio communication apparatus according to claim 27, wherein said controlling means, in the case of information that a determination result has degraded, increases the transmit antenna directivity beam width.

30. The radio communication apparatus according to claim 27, wherein said controlling means sets a limit for a change of transmit antenna directivity beam width.

31. A base station apparatus provided with a radio communication apparatus, said radio communication apparatus comprising:
storing means for storing a first signal indicating that an error has been detected and a second signal indicating that reception has been performed correctly;
determining means for determining whether a variation in channel conditions is an improvement or a degradation based on said first signal and said second signal; and
controlling means for controlling a communication method according to a determination result of this determining means.

32. A communication terminal apparatus provided with a radio communication apparatus, said radio communication apparatus comprising:
storing means for storing a first signal indicating that an error has been detected and a second signal indicating that reception has been performed correctly;
determining means for determining whether a variation in channel conditions is an improvement or a degradation based on said first signal and said second signal; and
controlling means for controlling a communication method according to a determination result of this determining means.

33. A radio communication method comprising:
a storing step of storing a first signal indicating that an error has been detected and a second signal indicating that reception has been performed correctly;
a determining step of determining whether a variation in channel conditions is an improvement or a degradation based on said first signal and said second signal; and
a control step of controlling a communication method according to a determination result of this determining step.
